# EUROPEAN PATENT SPECIFICATION

(11) **EP 1 400 741 B1**
(45) Date of publication and mention of the grant of the patent: **15.11.2006**
(21) Application number: 02078886.5
(22) Date of filing: 20.09.2002
(51) Int. Cl.: F16L 37/14

(54) **Pipe Coupling**
Rohrverbindung
Raccord de tuyau

(43) Date of publication of application: 24.03.2004
(73) Proprietor: VAN OORD ACZ B.V., 4207 HN Gorinchem (NL)
(72) Inventor: Vernimmen, Paul Marius Antonius, 4708 MB Roosendaal (NL); Stam, Cornelis Johannes Maria, 4204 AE Gorinchem (NL)
(74) Representative: Dorna, Peter

(56) References cited:
- GB-A- 584 896
- GB-A- 1 097 192
- NL-A- 7 512 564
- US-A- 3 127 199
- US-B1- 6 450 547

## Description

The invention relates to a coupling for coupling together two pipes of plastic material which are provided at their facing ends with flanges, a sleeve is arranged round each pipe, whilst the two sleeves and the flanges present between said sleeves are surrounded by a further outer sleeve, with a groove being formed in the outer circumference of each sleeve surrounding a pipe, which groove is positioned opposite a groove formed in the inner circumference of the outer sleeve, and with a locking element being present in each pair of opposed grooves, which locking element prevents the sleeves from moving in the longitudinal direction of the pipes with respect to each other.

At present, pipes of plastic material are frequently used and thus plastic pipes having a comparatively large diameter in the order of ± 1 m are installed over great lengths in/on the sea bottom, for example in coastal areas, for example for transporting liquids, such as drinking water, sewage water, etc.

The pipes generally have steel flanges, also in the case of plastic pipes, which flanges are connected together by means of bolts.

A pipe coupling is disclosed in GB 1,097,192, wherein two pipe ends each are provided with an end ring which is flush with the end face. At a distance from the end ring a collar is provided, which is secured to the pipe. Between the end ring and the collar a sealing ring is provided to afford a seal with the pipe end a sleeve that makes a close sliding fit over the collars and the end rings. Further a pair of circumferential grooves inside each end of the sleeve made with grooves in the collars and flexible rods are pushed into the mating grooves through angential holes in the sleeve.

Further GB 584,896 discloses a pipe coupling for joining rigid pipes by means of a screw threaded connection. A sealing ring is provided between the pipe ends and is clamped between these pipe ends by means of a force excerted by the clamping screw threated connection of one sleeve with another sleeve or the pipe end of an opposite pipe.

One drawback of such connections including steel parts is the fact that the steel parts are susceptible to corrosion. In order to prevent corrosion, an extra protective anti-corrosion layer or an anodic protective coating may be applied, but the effective life of such a protective coating is limited.

Consequently it is an object of the invention to obtain a pipe coupling in which the drawbacks of the couplings that have been known so far can be avoided.

According to the invention, this objective can be accomplished in that the flanges abut against each other, wherein each sleeve is provided loosely around each pipe and abuts against the flange of the pipe in question with one end.

When such a coupling for pipes of plastic material is used, also the parts of the coupling interconnecting the two pipes, such as the sleeves that are used, can be made of plastic material, so that the coupling will not be susceptible to corrosion. More specifically, a glass fibre-reinforced plastic can be used advantageously as the material for the two sleeves and also for said further outer sleeve, which material is in particular suitable for absorbing mechanical loads, such as pulling forces. Furthermore it is possible to use only a small number of parts in order to obtain a robust coupling, whilst the assembly of said parts can take place in a simple and quick manner. The coupling can furthermore be so designed that the coupling will not be weaker than the pipes themselves as regards their tensile strength and their flexural strength.

A very suitable locking element is obtained if the locking element is made up of an elongated, flexible string which extends in the two grooves.

Preferably, with a view to the fitting of a locking element, in particular a locking element in the form of such a string, a hole is formed near each of the grooves formed in the outer sleeve, which hole is in communication with the grooves in question and which functions to allow the insertion of a locking element therethrough.

Preferably, gaskets are arranged between the outer circumference of the flanges and the inner circumference of the outer sleeve. In this manner it is ensured that any axial tensile strains that may occur will not have an adverse effect on the liquid-tightness of the coupling.

A very suitable embodiment is obtained if the gaskets are accommodated in part in grooves formed in the inner wall of the outer tube.

The invention will be described in more detail hereinafter by means of a possible embodiment of a coupling according to the invention as schematically illustrated in the accompanying figures.

Figure 1 is a perspective view of parts of two pipes that are to be coupled together, the facing ends of which are shown in spaced-apart relationship, and also of parts of a coupling for coupling the pipes together.

Figure 2 is a sectional view of the ends of two pipes that have been coupled together by means of a coupling according to the invention.

The figures show the ends of two flexible plastic pipes 1 and 2 made of PE that are to be coupled together in a tension-proof manner. Flanges 4 and 5, respectively, which are made of the same material as the pipes 1 and 2, are fixed to the facing ends of these pipes by means of flow-welded joints.

Loose sleeves 6 and 7 of plastic material are arranged round the ends of the pipes 1 and 2, respectively, near the flanges 4 and 5, respectively.

Said sleeves 6 and 7 will have been slid over the pipes before the flanges 4 and 5 were provided, of course.

The external diameters of the sleeves 6 and 7 are at least substantially equal to the external diameters of the flanges 4 and 5.

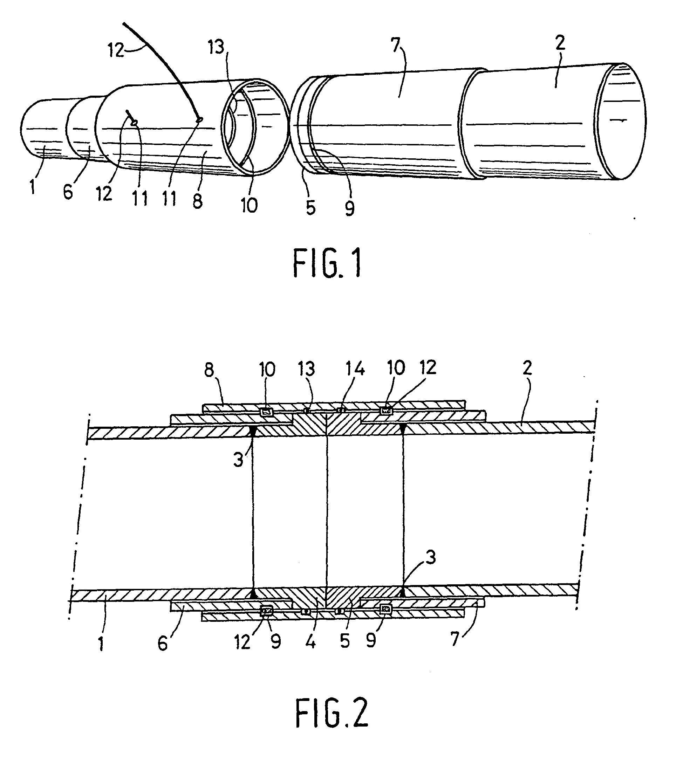

The flanges 4 and 5, as well as the sleeves 6 and 7, are surrounded by an outer sleeve 8 of plastic material, which will have been slid over either one of the pipes 1 or 2 prior to the assembly of the tension-proof coupling, and which will be moved to the position that is shown in figure 2 after the two flanges 4 and 5 of the pipes 1 and 2 have been placed in abutment with each other.

As is furthermore shown in the figures, a circular groove 9 is formed both in the outer circumference of the sleeve 6 and in the outer circumference of the sleeve 7, whilst a circular groove 10 is formed in the inner circumference of the outer sleeve 8, all this in such a manner that a groove 9 will be positioned opposite a groove 10 in the assembled condition of the coupling that is in shown in figure 2.

As is furthermore shown in figure 1, holes 11 are formed in the outer sleeve 8 near the grooves 10, via which holes locking means 12 in the form of strings or bands of plastic material can be inserted into the grooves 9, 10, as is indicated in Figure 1, which shows a string of plastic material, which must be inserted yet for the larger part, and a further string 12 of plastic material, which is inserted at least substantially entirely in the grooves 9, 10 in question. The dimensions of said flexible strings are such that they extend into the two opposed grooves 9 and 10, as is shown in Figure 2, in order to prevent the sleeves 6 and 7 from moving in the longitudinal direction of the pipes with respect to the outer sleeve 8.
Naturally, the material of said strings 12, which form locking elements for preventing movement, must be selected so that said strings will be capable of withstanding the axial forces that occur.

As is furthermore shown in the figures, further circular grooves 13 are formed in the inner circumference of the sleeve 8, between the grooves 10 that are formed in the inner circumference of the sleeve 8, in which grooves sealing elements, preferably in the form of 0-rings 14 or the like, are provided. In that case the construction will be such that the sealing rings or gaskets 14 form a seal between the inner circumference of the sleeve 8 and the outer circumferences of the flanges 4 and 5 in the assembled position of the coupling, as is apparent from Figure 2. Since the sealing rings 14 engage the outer sides of the plastic flanges 4 and 5, the tensile forces that may be exerted on the pipes 1, 2 in axial direction will not have an adverse effect on the seal. Said axial forces are transmitted to a respective sleeve 6 or 7 via a flange 4 or 5, respectively, and from said sleeves 6 or 7, via a string 12, to the sleeve 8, and via said sleeve 8 and a respective string 12 to the other sleeve 6 or 7 and the other flange 4 or 5.

Pressure loads will be directly transmitted via the flanges 4 and 5. Any flexural strains that may occur will be transmitted mainly via the sleeves 6,7 and 8 near the coupling, as a result of which it is possible to keep the strain concentrations that may occur at the location of the transition from the pipe to the flange at a low level.

In order to obtain sufficiently strong sleeves, the sleeves 6, 7 and 8 of plastic material may be reinforced with glass fibres or the like..

It will be apparent that the use of the construction according to the invention leads to a coupling which is built up of a comparatively small number of parts, whilst the assembly of the coupling can be carried out in a simple manner. When the coupling is used with plastic pipes, it is thus possible to obtain a corrosion-resistant construction entirely made of plastic material, which is furthermore quite suitable for use with pipes having a comparatively large diameter.

## Claims

1. A coupling for coupling together two pipes (1, 2) of plastic material which are provided at their facing ends with flanges (4, 5) the coupling comprising the flanges (4,5), two sleeves (6, 7) each sleeve (6, 7) mountable around each pipe (1, 2) a further outer sleeve (8) and a locking element (12), the two sleeves (6,7) and the flanges (4,5) present between said sleeves (6,7) surrounded by the further outer sleeve (8), whereby a groove (9) is formed in being the outer circumference of each sleeve (6, 7) surrounding a pipe (1, 2), which groove (9) is positioned opposite a groove (10) formed in the inner circumference of the outer sleeve (8), and the locking element (12) is present in each pair of opposed grooves (9, 10), which locking element (12) prevents the sleeves (6, 7) from moving with respect to each other in the longitudinal direction of the pipes (1, 2), **characterized in that** the flanges (4, 5) abut against each other and **in that** each sleeve (6, 7) is mountable loosely around each pipe and abuts against the flange (4, 5) of the pipe (1, 2) with one end.

2. A coupling according to claim 1, **characterized in that** said two sleeves (6, 7) and/or said further outer tube (8) are made of plastic material.

3. A coupling according to claim 2, **characterized in that** said two sleeves (6, 7) and/or said further outer tube (8) are made of a glass fibre-reinforced plastic material

4. A coupling according to claim 1, 2 or 3, **characterized in that** the locking element (12) is made up of an elongated, flexible string, which extends into the two grooves (9, 10).

5. A coupling according to claim 1, 2, 3 or 4, **characterized in that** a hole (11) is formed in the wall of said sleeve (8) near each of the grooves (10) formed in said outer sleeve (8), which hole (11) is in communication with the groove in question and which functions to enable the insertion of said locking element (12) therethrough.

6. A coupling according to any one of the preceding claims, **characterized in that** gaskets (14) are provided between the outer circumference of the flanges (4, 5) and the inner circumference of the outer sleeve (8).

7. A coupling according to claim 6, **characterized in that** said gaskets (14) are partially accommodated in grooves (13) formed in the inner wall of the outer sleeve (8).

## Patentansprüche

1. Kupplung zum Zusammenfügen zweier Rohre (1, 2) aus Kunststoffmaterial, die an ihren gegenüberliegenden Enden mit Flanschen (4, 5) versehen sind, wobei die Kupplung Folgendes umfasst: die Flansche (4, 5), zwei Hülsen (6, 7), wobei jede Hülse (6, 7) um jedes Rohr (1, 2) herum angebracht werden kann, eine weitere äußere Hülse (8) und ein Verriegelungselement (12), wobei die zwei Hülsen (6, 7) und die zwischen den Hülsen (6, 7) vorhandenen Flansche (4, 5) von der weiteren äußeren Hülse (8) umgeben sind, wobei im Außenumfang jeder ein Rohr (1, 2) umgebenden Hülse (6, 7) eine Nut (9) gebildet ist, die einer im Innenumfang der äußeren Hülse (8) gebildeten Nut (10) gegenüberliegt, und das Verriegelungselement (12) in jedem Paar von einander gegenüberliegenden Nuten (9, 10) vorhanden ist, wobei das Verriegelungselement (12) verhindert, dass sich die Hülsen (6, 7) in Längsrichtung der Rohre (1, 2) zueinander bewegen, **dadurch gekennzeichnet, dass** die Flansche (4, 5) aneinander stoßen und dass jede Hülse (6, 7) locker um jedes Rohr herum angebracht werden kann und mit einem Ende gegen den Flansch (4, 5) des Rohres (1, 2) stößt.

2. Kupplung nach Anspruch 1, **dadurch gekennzeichnet, dass** die zwei Hülsen (6, 7) und/oder das weitere äußere Rohr (8) aus Kunststoffmaterial bestehen.

3. Kupplung nach Anspruch 2, **dadurch gekennzeichnet, dass** die zwei Hülsen (6, 7) und/oder das weitere äußere Rohr (8) aus glasfaserverstärktem Kunststoffmaterial bestehen.

4. Kupplung nach Anspruch 1, 2 oder 3, **dadurch gekennzeichnet, dass** das Verriegelungselement (12) aus einer lang gestreckten, biegsamen Schnur besteht, die sich in die zwei Nuten (9, 10) erstreckt.

5. Kupplung nach Anspruch 1, 2, 3 oder 4, **dadurch gekennzeichnet, dass** ein Loch (11) in der Wand der Hülse (8) in der Nähe jeder der in der äußeren Hülse (8) gebildeten Nuten (10) gebildet ist, wobei das Loch (11) mit der fraglichen Nut (10) in Verbindung steht und dazu dient, das Einführen des Verriegelungselements (12) durch das Loch hindurch zu erlauben.

6. Kupplung nach einem der vorhergehenden Ansprüche, **dadurch gekennzeichnet, dass** Dichtungen (14) zwischen dem Außenumfang der Flansche (4, 5) und dem Innenumfang der äußeren Hülse (8) vorgesehen sind.

7. Kupplung nach Anspruch 6, **dadurch gekennzeichnet, dass** die Dichtungen (14) teilweise in den in der Innenwand der äußeren Hülse (8) gebildeten Nuten (13) aufgenommen sind.

## Revendications

1. Raccord pour raccorder ensemble deux tuyaux (1, 2) en matière plastique qui sont munis, à leurs extrémités opposées, de brides (4, 5), le raccord comprenant les brides (4, 5), deux manchons (6, 7), chaque manchon (6, 7) pouvant être monté autour de chaque tuyau (1, 2), un manchon extérieur supplémentaire (8) et un élément de verrouillage (12), les deux manchons (6, 7) et les brides (4, 5) présentes entre lesdits manchons (6, 7) étant entourés par le manchon extérieur supplémentaire (8), moyennant quoi une rainure (9) est formée dans la circonférence extérieure de chaque manchon (6, 7) entourant un tuyau (1, 2), laquelle rainure (9) est positionnée en face d'une rainure (10) formée dans la circonférence intérieure du manchon extérieur (8), et l'élément de verrouillage (12) est présent dans chaque paire de rainures opposées (9, 10), lequel élément de verrouillage (12) empêche les manchons (6, 7) de bouger l'un par rapport à l'autre dans la direction longitudinale des tuyaux (1, 2), **caractérisé en ce que** les brides (4, 5) viennent en butée l'une contre l'autre et **en ce que** chaque manchon (6, 7) peut être monté de manière lâche autour de chaque tuyau et vient en butée contre la bride (4, 5) butée contre la bride du tuyau (1, 2) avec une extrémité.

2. Raccord selon la revendication 1, **caractérisé en ce que** lesdits deux manchons (6, 7) et/ou ledit tube extérieur supplémentaire (8) sont faits dans une matière plastique.

3. Raccord selon la revendication 2, **caractérisé en ce que** lesdits deux manchons (6, 7) et/ou ledit tube extérieur supplémentaire (8) sont faits dans une matière plastique renforcée par des fibres de verre.

4. Raccord selon la revendication 1, 2 ou 3, **caractérisé en ce que** l'élément de verrouillage (12) est constitué d'un fil souple allongé qui s'étend dans les deux rainures (9, 10).

5. Raccord selon la revendication 1, 2, 3 ou 4, **caractérisé en ce qu'**un trou (11) est formé dans la paroi dudit manchon (8) près de chacune des rainures (10) formées dans ledit manchon extérieur (8), lequel trou (11) est en communication avec la rainure (10) en question et sert à permettre l'insertion dudit élément de verrouillage (12) à travers.

6. Couplage selon l'une quelconque des revendications précédentes, **caractérisé en ce que** des garnitures d'étanchéité (14) sont prévues entre la circonférence extérieure des brides (4, 5) et la circonférence intérieure du manchon extérieur (8).

7. Raccord selon la revendication 6, **caractérisé en ce que** lesdites garnitures d'étanchéité (14) sont partiellement reçues dans les rainures (13) formées dans la paroi intérieure du manchon extérieur (8).
